# EUROPÄISCHE PATENTSCHRIFT

(11) **EP 3 256 269 B1**
(45) Veröffentlichungstag und Bekanntmachung des Hinweises auf die Patenterteilung: **10.04.2019**
(21) Anmeldenummer: 16706323.9
(22) Anmeldetag: 10.02.2016
(51) Int. Cl.: B08B 9/093, F23G 5/46, B01D 21/24, F23G 7/06, B08B 9/08, B08B 15/00

(54) **VERFAHREN ZUM REINIGEN EINES GROSSTANKS FÜR BRENNBARE FLÜSSIGKEIT UND VORRICHTUNG HIERZU**
METHOD FOR CLEANING A LARGE TANK FOR FLAMMABLE LIQUID AND DEVICE THEREFOR
PROCÉDÉ POUR NETTOYER UNE CITERNE POUR LIQUIDE INFLAMMABLE ET DISPOSITIF POUR RÉALISER CE NETTOYAGE

(30) Priorität: 13.02.2015 DE 102015102118
(43) Veröffentlichungstag der Anmeldung: 20.12.2017
(73) Patentinhaber: Susewind, Wolfgang, 51515 Kürten (DE)
(72) Erfinder: Susewind, Wolfgang, 51515 Kürten (DE)
(74) Vertreter: Patentanwälte Bauer Vorberg Kayser
(86) Internationale Anmeldenummer: PCT/EP2016/052788
(87) Internationale Veröffentlichungsnummer: WO 2016/128439

(56) Entgegenhaltungen:
- EP-A1- 1 498 190
- DE-B4-102006 020 427
- DE-T2- 69 302 550
- US-A1- 2008 023 040

## Beschreibung

Die Erfindung bezieht sich auf ein Verfahren zur Reinigung eines Großtanks für brennbare Flüssigkeit, insbesondere für Öl, sowie auf eine Vorrichtung zur Durchführung dieses Verfahrens.

Großtanks, worunter insbesondere Rohöltanks verstanden werden, müssen regelmäßig gereinigt werden. Im Laufe der Zeit setzen sich Ausfällungen aus dem Rohöl als Schlammschicht auf dem Boden der Tanks ab. Diese Schlammschicht besteht im wesentlichen aus sog. schweren Kohlenwasserstoffen mit hohem Siedepunkt, wie Paraffinen und Asphaltenen, in denen noch erhebliche Rohölbestandteile gebunden sind, anorganischen Sedimenten, wie Sand und Rost, sowie im Schlamm gebundenes Wasser. Je nach Verwendungszweck, Tankmanagement und Lage des Tanks können diese Mengen sehr unterschiedlich sein. Teilweise können diese Schlämme Höhen bis zu mehreren Metern aufweisen. Dabei ist zu beachten, dass diese Schlämme nicht homogen in einer Pegelhöhe im Tank liegen, sondern in einer Art "Gebirge".

Ein gewisses Aussedimentieren in den Tanks ist auch gewünscht, um Verschmutzungen des Öls aus der Förderung (Sand) und aus dem Transport (Rost aus anderen Tanks, Apparaten und Pipelines) zu minimieren, dadurch werden die Aufbereitungsanlagen der Produktionsanlagen geschont.

Um jedoch diese Tanks zu Inspektions- oder Reparaturzwecken begehbar zu machen und von der Ex-Atmosphäre zu befreien, muss dieser Schlamm, der nicht mehr selbständig aus dem Tank herausfließt, ausgebracht werden. Er wird als Restsumpf bezeichnet.

Durch die im Restsumpf befindlichen Kohlenwasserstoffe, vor allem die Benzinanteile, besteht jedoch direkt bei der Zugabe von Umgebungsluft absolute Explosionsgefahr. Dieser Explosionsgefahr begegnete man früher mit langen Belüftungsphasen, bei denen durch Zwangslüftung die Kohlenwasserstoffgase in die Atmosphäre abgegeben wurden, bis der Tankinnenraum ein sicheres Begehen zuließ. Danach wurde dann durch Personal im Tank dieser Restsumpf mit warmem Wasser oder mechanischen Handwerkzeugen mobilisiert und über Pumpen oder Schlammsaugwagen ausgebracht und der Entsorgung zugeführt.

Dieses Verfahren ist jedoch heute an vielen Stellen nicht mehr zulässig und/oder gewollt. Die Gründe hierfür sind vor allem im Sicherheits-, im Gesundheits-, im Umweltschutzbereich sowie unter ökologischen Gesichtspunkten zu finden, die in gesellschaftlicher und gesetzlicher Hinsicht immer mehr in den Vordergrund rücken.

Aus diesem Grund werden heute Spülverfahren aus folgenden Gründen eingesetzt:
- Rückgewinnung von verarbeitbaren, nutzbaren Ölen aus den Schlammablagerungen, also aus dem Restsumpf,
- Reduzierung der Entsorgungsmengen,
- Reduzierung der Exposition von Mitarbeitern,
- Reduzierung der Emissionen in die Atmosphäre und
- Reduzierung der Explosionsgefahr.

Aus EP 1 498 190 A1 ist ein Verfahren zum Reinigen eines Großöltanks bekannt. Dabei werden Gase aus dem Tank, die sich oberhalb des Restsumpfes im Gasraum des Tanks befinden, abgesaugt und verbrannt. Die dabei erhaltene Wärme wird genutzt, um einen Anteil an Restsumpf, der über eine Absaugleitung entnommen wurde, kontinuierlich zu erhitzen und zumindest einen Teilstrom davon wieder in den Restsumpf einzuleiten. Die Abgase aus der Verbrennung werden nach Kühlen als in Inertgas in den Gasraum eingeleitet.

Aus der DE 10 2006 020 427 B4 sind ein Verfahren und eine Vorrichtung zum Innenreinigen eines Tanks bekannt. Auch hier wird ein Gasgemisch, das sich oberhalb des Restsumpfes im Gasraum befindet, abgesaugt, es wird anschließend verdichtet und zumindest teilweise verbrannt, wobei das Abgas in den Gasraum als Inertgas geleitet wird.

Aus DE 693 02 550 P2 ist ein Verfahren zur Reinigung eines Behälters und Zurückgewinnung und Behandlung der Restflüssigkeit im Behälter bekannt. Dabei wird ein Anteil des Restsumpfes entnommen und in einen Saugbehälter gefördert. Dieser hat eine Trennwand, dadurch werden Feststoffanteile zurückgehalten. Der Flüssiganteil wird durch im Tankdach angeordnete Düsen unter hohen Druck auf den Restsumpf gesprüht.

Großtanks der hier in Rede stehenden Art haben vorzugsweise ein Volumen von mindestens 1000 m3. Sie sind vorzugsweise für Rohöl bestimmt. Sie haben ein festes Dach und/oder ein Schwimmdach.

Die vorliegende Erfindung hat es sich zum Ziel gesetzt, das Tankreinigungsverfahren mit geringerer Emission an Schadstoffen, insbesondere an CO₂ durchzuführen, es soll kostengünstiger ablaufen, insbesondere soll möglichst wenig Stickstoff zur Inertisierung verwendet werden, schließlich soll das Verfahren rascher und auch insoweit energiegünstiger durchgeführt werden. Der Restsumpf soll möglichst stark aufgewirbelt und rasch verflüssigt werden, die vorhandene Energie soll möglichst gut und insbesondere für die Erwärmung des Restsumpfes eingesetzt werden.

Hiervon ausgehend ist es Aufgabe der Erfindung, ein Verfahren zum Reinigen eines Großtanks für brennbare Flüssigkeit, insbesondere Rohöl, dahingehend weiterzubilden, dass die Emissionen an Schadstoffen verringert werden, das Verfahren kostengünstiger und unter möglichst geringem Einsatz von separatem Inertgas Stickstoff abläuft und das Verfahren energiegünstiger und schneller durchgeführt wird. Diese Aufgabe wird gelöst durch das Verfahren nach den Merkmalen des Anspruchs 1.

Weiterhin ist es Aufgabe der Erfindung, eine Vorrichtung anzugeben, die es ermöglicht, bei der Tankreinigung weniger Emissionen, insbesondere CO₂ anfallen zu lassen, die ein kostengünstigeres Arbeiten ermöglicht, insbesondere den Einsatz von Stickstoff gering hält und die eine rasche Aufheizung und damit energiegünstigere Reinigung ermöglicht. Diese Aufgabe wird gelöst durch die Vorrichtung nach Anspruch 10.

Bei dem Verfahren wird möglichst in geschlossenen Kreisläufen gearbeitet. Das aus dem Gasraum des Großtanks abgesaugte Gas enthält nicht nur gasförmige Kohlenwasserstoffe, sondern auch einen erheblichen Anteil an Aerosolen, also im Gasraum schwebender Kohlenwasserstoff. Gas und Aerosole zusammen haben einen hohen Brennwert, in der Brennkammeranlage erzeugen sie bei der Verbrennung eine große Wärmemenge. Diese wird in den über die Absaugleitung entnommenen Strom aus dem Restsumpf übertragen. Dieser besteht aus flüssigen und fließfähigen Rohölen aus dem Restsumpf. In der Heizschlange der Brennkammeranlage wird dieser Strom aus dem Restsumpf direkt oder indirekt erwärmt, er wird anschließend wieder in den Großtank mit hohem Druck über Düsen eingeleitet, wobei der Druck so hoch gewählt ist, dass der im Großtank verbliebene Restsumpf erheblich bewegt und zugleich aufgewärmt wird. Durch das forcierte Eindüsen von erwärmter Menge an Restsumpf wird der Restsumpf so stark durchwirbelt, dass ständig Aerosole gebildet werden, die wiederum in den Gasraum aufsteigen und dort abgesaugt werden.

Falls im Anfangsstadium der Reinigung noch nicht ausreichend viel flüssiges Öl zur Verfügung steht, kann auch Öl, z.B. Rohöl, aus einem zweiten Tank entnommen und als Spülflüssigkeit verwendet werden. Dieses Öl kann zusammen mit einem Strom aus dem Restsumpf oder auch ohne diesen Strom zur Reinigung eingesetzt werden.

Das Eindüsen von erwärmter Menge an Restsumpf wird solange durchgeführt, bis sich die flüssigen und fließfähigen Rohöle mit gelösten Paraffinen gesättigt haben. Hierbei werden anorganische Sedimente aus den Paraffinen ausgewaschen und sinken auf den Boden des zu reinigenden Großtanks ab. Die Sedimente weisen eine hohe Dichte auf, deshalb sinken sie auf den Tankboden und bleiben dort liegen. Sie werden nur noch wie Sand in einem Wasserglas verschoben, können jedoch nicht mehr mit dem erwärmten, angereicherten und somit dünnflüssigen Paraffin-Öl-Gemisch in Mischung gehen. Insbesondere erfolgt das Absaugen über die Absaugleitung so, dass nicht unmittelbar auf dem Tankboden abgesaugt wird, sondern im Wesentlichen die flüssigen und fließfähigen Rohöle erfasst werden.

In der Brennkammeranlage fällt Abgas an, dieses wird in den Gasraum des Großtanks geleitet und ersetzt dort den abgesaugten Gasstrom. Es kann vor dem Einleiten eventuell gekühlt werden und wird vorzugsweise vor dem Einleiten entschwefelt.

Im Großtank wird stets ein Unterdruck geringfügig unterhalb des Atmosphärendrucks aufrechterhalten. Ein Ausströmen von Gasen und anderen Substanzen aus dem Großtank wird dadurch verhindert.

Das Verfahren wird über eine längere Zeitspanne von zwei bis fünf Tagen durchgeführt. Es wird stets eine Menge an flüssigen und fließfähigen Rohölen im Kreislauf geführt, der Restsumpf erwärmt sich dabei mehr und mehr, er wird zunehmend verflüssigt. Nach einer gewissen Verfahrensdauer werden die dann mit Paraffin und Asphalten gesättigten, flüssigen und fließfähigen Rohöle in einen anderen Rohöltank oder in einenZwischentank verpumpt. Sie sind nutzbare Rückstände. Im anderen Rohöltank oder Zwischentank werden diese Öle mit einer großen Menge ungesättigtem Öl vermischt. Es entsteht eine Mischung mit nur noch geringem Paraffinanteil (i.d.R. Mischung 1:20 bis 1:50).

Demgemäß werden die im Restsumpf befindlichen Kohlenwasserstoffe nach und nach aus dem Tank entfernt, sie werden teilweise verbrannt, insbesondere in Form von Aerosolen, der Rest wird in den Zwischentank gefördert. Im Großtank verbleiben lediglich anorganische Bestandteile, insbesondere Sand, Rost usw.

Es ist nicht zu vermeiden, dass auch nach längerer Verfahrensführung immer noch ein Anteil von Kohlenwasserstoffen sich im dann verbliebenen Restsumpf befindet. Das Verfahren wird so lange durchgeführt, bis dieser Anteil unter wirtschaftlichen Gesichtspunkten gesehen vernünftig klein ist.

In einem nächsten Schritt werden geringere Mengen von frischem, paraffinarmem Rohöl in den Großtank eingeleitet und wie oben beschrieben im Kreislauf erwärmt, gemischt und nach Sättigung in einen anderen Tank verpumpt. Dieser Schritt wird wiederholt, bis keine weitere Lösung von Paraffinen in dem Rohöl mehr festzustellen ist und die fortlaufenden Höhenmessungen keine nennenswerte Schlammhöhe mehr im Tank aufzeigen.

In einem folgenden Schritt wird eine Menge leichtes Gasöl (HEL - Qualität, auch Dieselspülung genannt), oder ein gleichwertiges Kohlenwasserstoffprodukt in den Großtank eingeleitet und, wie oben beschrieben im Kreislauf erwärmt und mit der im Tank befindlichen Restmenge Ölschlamm & Sediment vermischt, um ein weiteres Auswaschen der Sedimente und ein Herauslösen von nutzbaren Kohlenwasserstoffen (KWs) zu ermöglichen. Gleichzeitig nimmt das HEL leichtflüchtige Kohlenwasserstoffe auch aus der Gasatmosphäre und den im vorherigen Spülprozess bewusst gebildeten Aerosolen auf, insbesondere Benzole auf, wodurch die KW-Belastung in der Tankatmosphäre langsam absinkt. Auch diese Flüssigphase wird in einen weiteren Rohöltank verpumpt und kann der Produktion zugeführt werden.

Im letzten Schritt erfolgt die Auswaschung bzw. Dekontamination. Mit Hilfe einer wässrigen Lösung, die mit chemischen Hilfsmitteln versetzt werden kann, wird der Tankinnenraum sauber gewaschen und werden restliche lösbare Kohlenwasserstoffe ausgewaschen. Auch dieser Schritt erfolgt unter Erwärmung des Spülmediums. Das Spülmedium in diesem Schritt kann über einen statischen Abscheider immer wieder von der Ölphase befreit werden, um dann wieder als Spülmedium eingeleitet zu werden. Die gewonnene Ölphase wird i.d.R. in das Slop-System der Raffinerie geleitet, wie auch nach Abschluss der Spülung die wässrige Lösung.

Um bei sämtlichen Spülschritten die Explosionsgefahr auszuschließen, wurde früher, nach dem Stand der Technik, die Gasphase im Tank, die sehr stark mit Kohlenwasserstoffen angereichert ist, durch die Inertisierung mit Stickstoff ungefährlich gemacht. Dies hat jedoch einen entscheidenden Nachteil, der bisher nicht weiter betrachtet wurde:
Die Gasphase im Tank kann man als Erdgas betrachten und wie den Schlamm auch als Rohstoff ansehen. Bisher wurde diese Phase nur als explosions- bzw. umweltgefährdend angesehen. Die Gefahr wurde durch Stickstoffüberlagerung eliminiert, was jedoch, um das unerwünschte Eindringen von Sauerstoff in den Tank zu verhindern, durch einen leichten Überdruck der N2-Phase zur Atmosphäre erfolgte und zu diffusen Kohlenwasserstoffemissionen und zur Geruchsbildung führte. Aufgrund dieser festgestellten Problematik und dem wachsenden Umweltbewusstsein, auch auf Seiten des Gesetzgebers und der Anwohner, wurden zunehmend nachgeschaltete Fackel- oder Brennkammeranlagen eingesetzt, die bei Temperaturen von um die 1.200 °C diese Kohlenwasserstoffgase verbrennen.

Ein weiteres Problem war hierbei auch, dass oft das Kohlenwasserstoffgemisch nicht mehr ausreichend fett ist, um alleine zu brennen, sodass große Energiemengen in Form von Propangas zugekauft & verwendet wurden, die einen zuverlässigen Einsatz der Nachverbrennungsanlagen sicherstellen.

Die anorganischen Bestandteile des Restsumpfes werden später direkt aus dem Tank herausgefördert, insbesondere durch Personal, das in den Tank hineingeht und/oder durch entsprechende mechanische Hilfsmittel.

Die Verfahrensführung erfolgt so, dass eine möglichst große Wärmemenge rasch in den Restsumpf und insgesamt in den Großtank eingebracht wird. Der Restsumpf und damit auch der Großtank erwärmen sich, der Großtank verliert dabei ständig Wärme nach außen hin. Je kürzer das Verfahren durchgeführt wird, umso geringer ist diese Verlustwärme. Der Restsumpf wird auch durch das warme Abgas aufgeheizt, insbesondere wird er durch die erwärmten, flüssigen Bestandteile des Restsumpfes erwärmt.

Das Verfahren ermöglicht es, dass der Restsumpf durch bewusste Spülungen längstmöglich so als Kohlenwasserstoffquelle zur Verfügung steht, bis praktisch alle Ablagerungen aufgelöst worden sind und in der Dieselspülung mit der Auswaschung der Kohlenwasserstoffe begonnen wird, wobei dann der Anteil brennbarer Gase langsam absinkt.

Darüber hinaus soll die entstehende Abwärme genutzt werden, z.B. zur Vorwärmung oder Dampferzeugung, um die Heizschlange bzw. das im Kreislauf befindliche Öl mit der notwendigen Wärmeenergie zu versorgen.

Um zu vermeiden, dass anorganische Bestandteile des Restsumpfes immer wieder im Umlauf gehalten werden und insbesondere nicht die Düsen durchlaufen und dabei möglicherweise die Düsen abschleifen, wird vorzugsweise eine Trennvorrichtung eingesetzt, die körnige Bestandteile von Flüssigkeit trennt. Nur die Flüssigkeit wird erwärmt und über die Düsen in den Tank zurückgeführt. Die anorganischen Bestandteile in Form von Sand, Rost und anderen Körnern werden zurückgehalten. Diese Bestandteile befinden sich dann außerhalb des Großtanks und müssen nicht erst aus diesem heraus gefördert werden. Vorzugsweise wird eine Grobtrennung durchgeführt, bei der nur so große körnige Bestandteile körnige Bestandteile zurückgehalten werden, die die Pumpen beschädigen können.

Sand wird dabei nicht zurückgehalten. Vorzugsweise befindet sich im Rohöl weniger als 5 Vol-% Sand.

Desweiteren ersetzt zumindest ein Teil der entstehenden CO2 Abgase den bisher verwendeten Stickstoff. Sie werden, gegebenenfalls nach Kühlung und Aufbereitung, insbesondere H2S-Strippung, in den Tank eingeleitet. Stickstoff wird im normalen Betrieb nicht benötigt, es reicht das Abgas aus der Brennkammeranlage aus, um den Gasraum im Großtank zu inertisieren. Beim Anfahren wird ggfs. ein gewisser Anteil von Stickstoff benötigt, denn dann steht eventuell noch nicht genügend Abgas für die Inertisierung zur Verfügung. Beim Anfahren kann auch ein Stützgas verwendet werden, beispielsweise Propan. Beim Anfahren ist eventuell in der Regel noch nicht genügend Gas (einschl. Aerosol) vorhanden, es kann noch nicht eine ausreichende Wärmemenge durch dessen Verbrennung produziert werden. Hier kann durch Propan nachgeholfen werden. Auch gegen Ende des Reinigungsverfahrens, wenn nicht mehr so viele Gase und Aerosole gebildet und ausgewaschen werden, reicht die durch die Verbrennung erreichte Wärmeenergie möglicherweise nicht mehr aus, um den in Umlauf befindlichen flüssigen Anteil, auch Spülmittel genannt, wirksam aufzuheizen. Dann ist es ebenfalls vorteilhaft, über ein Stützgas wie insbesondere Propan zusätzliche Energie zuzufügen.

Die starke mechanische Bewegung des Restsumpfes, das Einbringen hoher Wärmemengen durch die eingedüste Spülflüssigkeit und in geringerem Maße auch durch das Abgas und das rasche Umlaufen des Spülmediums durch die Anlage ermöglichen es, dass der Restsumpf in kürzerer Zeit als bei bisherigen Verfahrensführungen ausreichend aufgewärmt wird, damit die nutzbaren Rückstände abgepumpt und im separaten Zwischentank zwischengelagert werden können.

Die in den Ansprüchen einzeln aufgeführten Merkmale, auch die Untermerkmale, können in beliebiger, technisch sinnvoller Weise miteinander kombiniert werden und zeigen weitere Ausgestaltungen der Erfindung auf. Die Beschreibung charakterisiert und spezifiziert die Erfindung insbesondere im Zusammenhang mit den Figuren zusätzlich.

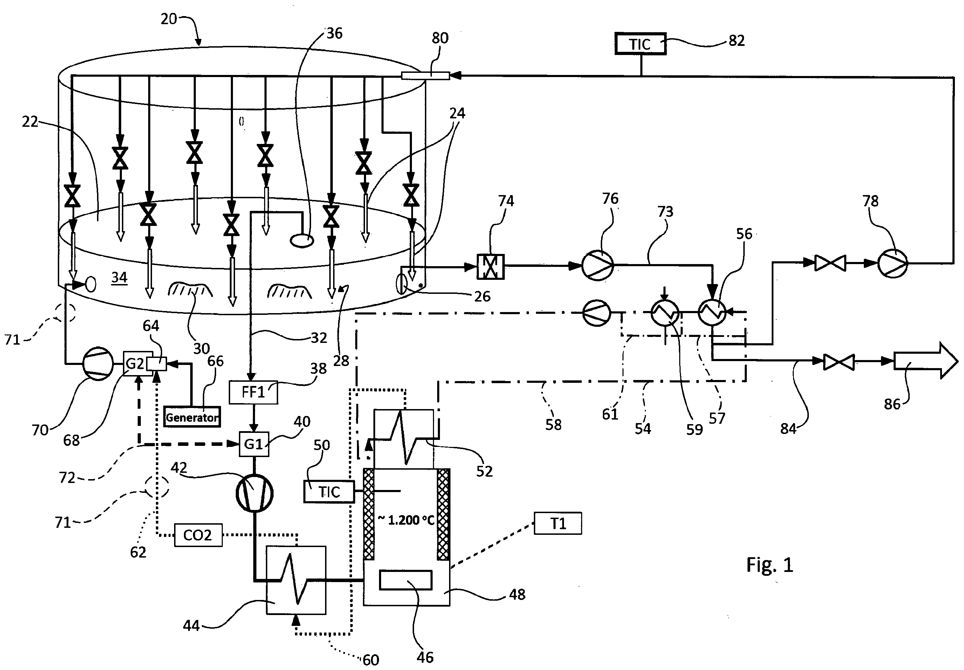

Das erfindungsgemäße Verfahren sowie die entsprechende Vorrichtung werden im Folgenden anhand eines nicht einschränkend zu verstehenden Ausführungsbeispiels näher erläutert und beschrieben. Dies erfolgt unter Bezugnahme auf die einzige Figur. Diese zeigt in schematischer Darstellung einen zu reinigenden Großtank mit zugehörigen, für die Reinigung benötigten Vorrichtungen.

Ein zu reinigender Großtank 20 ist hier als Tank mit Schwimmdach 22 ausgeführt. Das Schwimmdach 22 ruht auf hier nicht näher dargestellten Stützen, sogenannte Tankdachstützen. Einige von ihnen sind entfernt, die dadurch freigewordenen Stutzen sind verwendet worden, um Einspritzdüsen 24 zu montieren. Das Schwimmdach 22 befindet sich in seiner zweittiefsten Position, der sog. Reparaturstellung, die in der Regel zwischen 1,8 und 2,2 m liegt.

Aus dem Großtank 20 ist bereits das normalerweise dort gelagerte Rohöl soweit wie möglich entfernt worden. Dies erfolgt über eine Absaugstelle 26. In der Seitenwand und im untersten Bereich des Großtanks 20. Auf einem Boden 28 des Großtanks 20 ist ein Restsumpf 30 verblieben. Er besteht überwiegend, zumeist über 95 Vol.-%, aus Kohlenwasserstoffen, der Rest ist Sand und Rost. Sonstige Anteile liegen unter 0,1 Vol.-%.

Ggf. nach einer Anlaufphase, auf die noch eingegangen wird, wird kontinuierlich über viele Stunden, beispielsweise 2 bis 3 Tage, folgendes Verfahren durchgeführt:
Über eine Gasleitung 32, die in einem Gasraum 34 des Großtanks 20 mündet, wird Gas aus dem Großtank 20 abgepumpt. Das Ansaugen erfolgt an einer Absaugstück 36, das sich im Gasraum 34 befindet. In die daran angeschlossene Gasleitung 32 ist zunächst ein Flammfilter 38 und anschließend ein Durchflussmesser Gas G1 40 eingefügt. Weiterhin befindet sich in der Gasleitung 32 ein Gebläse 42, das für das Ansaugen verantwortlich ist. Schließlich mündet die Gasleitung 32 in einen Gaswärmetauscher 44. Dort wird das Gas erwärmt. Dabei wird auch das im Gas enthaltene Aerosol erhitzt und geht zu mehr als 50% in die Gasphase über. Danach wird das vorgewärmte Gas einem Brenner 46 einer Brennkammeranlage 48 zugeleitet und dort verbrannt. Eine Verbrennungstemperatur von etwa 1.200° C ist angegeben. Diese wird über einen ersten Temperatursensor TIC 50 erfasst. In der Brennkammeranlage 48 ist eine Heizschlange 52 andeordnet. Sie befindet sich in einem Kreislauf 54 für ein Wärmemedium, z.B. Thermoöl oder Dampf/Wasser, in den ein Wärmetauscher 56 eingefügt ist. In der Heizschlange 52 wird heißes Wärmemedium, insbesondere heißes Thermoöl oder Dampf erzeugt, das dem Wärmetauscher 56 zugeleitet wird. Abgekühltes Wärmemedium wird dann wieder der Heizschlange 52 zugeleitet. Die Temperatur im Rückstrom dieses Kreislaufes 54 wird durch einen zweiten Temperatursensor 58 erfasst.

Weiterhin ist es vorteilhaft, im Kreislauf 54 einen Wärmeübertrager 59 anzuordnen, der sekundärseitig von Wasser oder einem entsprechenden Medium durchströmt wird (siehe Pfeil). Er ermöglicht ein Ableiten der Wärme aus dem heißen Wärmemedium, was z.B. eine bessere Regelung der Temperatur im Kreislauf 54 und auch ein Notabschalten ermöglicht. Der Wärmetauscher 56 und der Wärmeübertrager 59 können jeweils überbrückt werden, hierzu sind eine erste Bypassleitung 57 und eine zweite Bypassleitung 61 vorgesehen. Es sind für einen Bypass zugehörige Ventile (nicht dargestellt) in der Leitung des Kreislaufs 54 und in den Bypassleitungen 57 und 61 vorgesehen. Im Kreislauf 54 ist eine Umwälzpumpe angeordnet.

Das durch die Verbrennung des Gases in der Brennkammeranlage 48 anfallende Abgas wird über eine erste Abgasleitung 60 dem Gaswärmetauscher 44 zugeleitet, dort wärmt es das Gas, das über die Gasleitung 32 dem Brenner 46 zugeleitet wird, vor. Das nun abgekühlte Abgas wird über eine zweite Abgasleitung 62 ggf. einem daran angeschlossenen Speicher CO2 zugeleitet und strömt weiter zu einer Mischstrecke 64. Dort kann es mit Stickstoff vermischt werden. Der Stickstoff wird mittels eines Generators 66 erzeugt oder kann in flüssiger Form verdampft werden. Das Abgas, dem ggf. Stickstoff zugemischt ist, strömt nun durch einen Durchflussmesser Abgas 68, auch mit G2 bezeichnet. Es wird von dort einem Verdichter 70 zugeleitet und in den Gasraum 34 eingeblasen.

In die Leitung 62 kann eine Entschweflungsstufe 71, die insbesondere ein Aktivkohlefilter aufweist, eingefügt werden. Diese Entschwefelungsstufe 71 kann alternativ auch zwischen dem Verdichter 70 und vor dem Ort des Einblasens in den Gasraum 34 angeordnet werden.

Die beiden Durchflussmesser 40, 68 sind über eine gestrichelt dargestellte Verbindungslinie 72 miteinander verbunden. Diese zeigt eine Steuerung bzw. einen Abgleich an. Dieser ist dahingehend, dass ein geringer Volumenstrom an Abgas in den Gasraum 34 eingeleitet wird als aus diesem entnommen wird. Anders ausgedrückt bleibt im Gasraum 34 stets ein Unterdruck. Ein entsprechender Drucksensor ist im Gasraum 34 vorgesehen (nicht dargestellt). Der Unterdruck liegt geringfügig unter dem Außendruck, beispielsweise bei 0,1 bis 0,001 bar.

Es wird so wenig wie möglich an Stickstoff zugemischt. Es wird versucht, möglichst vollständig mit dem Abgas, also insbesondere CO2, als Inertgas zu arbeiten. Über den Speicher CO2 wird jeweils nur so viel an gespeichertem Abgas hinzugegeben, wie für die Aufrechterhaltung eines Unterdrucks notwendig ist.

An der Absaugstelle 26 oder einer anderen, geeigneten Entnahmestelle wird ein Mengenstrom an Restsumpf aus dem Großtank 20 entnommen und über eine Leitung 73 zunächst einem Grobfilter 74 zugeleitet. Dort werden grobe Bestandteile, die eine nachgeschaltete Pumpe 76 gefährden könnten, abgetrennt. Sandkörner werden beispielsweise nicht abgetrennt. Vorzugsweise werden nur Teile, die zumindest eine Abmessung über 5 mm, vorzugsweise über 10 mm aufweisen, zurückgehalten. Nach Durchlauf durch die Pumpe 76 wird der Mengenstrom dem Wärmetauscher 56 zugeleitet und dort erwärmt. Der Mengenstrom wird über ein Ventil und eine Boosterpumpe 78 auf höheren Druck, beispielsweise über 15 bar, insbesondere über 20 bar, vorzugsweise über 30 bar, gebracht. Von dort wird der Mengenstrom einem Verteilerbalken 80 zugeleitet. In die Leitung 73 ist ein dritter Temperatursensor 82 eingefügt, der die Temperatur des Mengenstroms erfasst. Die Temperatur liegt unter 50° C, sie liegt beispielsweise im Bereich von 30 bis 45° C.

An den Verteilerbalken 80 sind mehrere Einspritzdüsen 24 angeschlossen. Jeder Einspritzdüse 24 ist ein eigenes, einzeln ansteuerbares Ventil zugeordnet. Dadurch können die einzelnen Einspritzdüsen 24 gezielt eingesetzt werden. Typischerweise sind maximal zwei Einspritzdüsen 24 in Betrieb. Die insgesamt neun dargestellten Einspritzdüsen 24 werden nacheinander verwendet. Als Einspritzdüsen 24 werden sogenannte Manway Cannon verwendet. Sie sind im Stand der Technik bekannt. Sie sind mit einem Scheinwerfer und einer Kamera ausgerüstet.

Bei der Tankreinigung werden anfangs zunächst diejenigen Einspritzdüsen 24 eingesetzt, die sich in der Nähe der Absaugstelle 26 befinden. Im Bereich um die Absaugstelle 26 wird eine Vertiefung bzw. ein Tal gebildet, in das flüssige Bestandteile aus den Restsumpf hineinlaufen können. Dort werden sie von der Absaugstelle 26 erfasst. Die Einspritzdüsen 24 werden beim Einspritzen vorzugsweise bewegt. Insbesondere werden sie auf Kreisbahnen geführt. Die Einspritzdüsen 24 werden so bewegt, dass das Tal bzw. die Vertiefung im Bereich der Absaugstelle 26 immer vergrößert wird. Es werden also vorzugsweise die Anteile des Restsumpfes 30 mit Düsen 24 bestrahlt, die das Tal begrenzen.

Über eine Abnahmeleitung 84, in die ein Ventil eingefügt ist, können flüssige Kohlenwasserstoffe entnommen und beispielsweise einem Zwischentank 86 zugeleitet werden.

In einer Anlaufphase ist in der Regel noch nicht ausreichend fettes Gas, insbesondere noch wenig Aerosol, vorhanden. Es wird bei Bedarf ein externes Brenngas, beispielsweise Propan, der Brennkammeranlage 48 zugeleitet, bis der Volumenstrom der gemäß Schritt a) abgesaugten Gase so ausreichend ist, dass damit die Brennkammeranlage 48 betrieben werden kann.

Ebenso wird zum Ende des Reinigungsverfahrens ein externes Brenngas, z.B. Propan der Brennkammeranlage 48 zugeführt, wenn das gemäß Schritt a) abgesaugte Gas nicht mehr zum Erzeugen eines ausreichenden Stromes an brennbarem Gasgemisch ausreicht.

Bei dem Verfahren zum Reinigen eines Großtanks wird ein Volumenstrom an Gas aus dem Gasraum 34 des Großtanks 20 abgesaugt und in einer Brennkammeranlage 48 verbrannt. Zumindest ein Teil des dabei anfallenden Abgases wird über eine Abgasleitung 60, 62 in den Gasraum 34 zurückgeführt, in dem ein Unterdruck aufrechterhalten wird. Über eine Absaugleitung 73 wird ein Mengenstrom an Restsumpf 30 aus dem Großtank 20 entnommen und einem Wärmetauscher 56 zugeleitet, der über einen Kreislauf 54 mit einer Heizschlange 52 der Brennkammeranlage 48 verbunden ist. Der erhitzte Mengenstrom an Restsumpf 30 wird in den Großtank 20 durch im Gasraum 34 endende, auf den Restsumpf 30 gerichtete Einspritzdüsen 24 unter hohem Druck von mindestens 20 bar auf einen Teilbereich der im Großtank 20 befindlichen Menge an Restsumpf 30 geleitet. Dabei wird die im Großtank 20 befindliche Menge an Restsumpf 30 nach und nach bewegt, erwärmt und aufgewirbelt, wobei Aerosole gebildet werden, die im Gasraum 34 Bestandteil des Gases sind und als Volumenstrom über die Gasleitung 32 abgesaugt werden.
- 20: Großtank
- 22: Schwimmdach
- 24: Einspritzdüsen
- 26: Absaugstelle
- 28: Boden
- 30: Restsumpf
- 32: Gasleitung
- 34: Gasraum
- 36: Absaugstück
- 38: Flammfilter
- 40: Durchflussmesser, Gas G1
- 42: Gebläse
- 44: Gaswärmetauscher
- 46: Brenner
- 48: Brennkammeranlage
- 50: 1. Temperatursensor
- 52: Heizschlange
- 54: Kreislauf
- 56: Wärmetauscher
- 57: erste Bypassleitung
- 58: 2. Temperatursensor
- 59: Wärmeübertrager
- 60: 1. Abgasleitung
- 61: zweite Bypassleitung
- 62: 2. Abgasleitung
- 64: Mischstrecke
- 66: Generator
- 68: Durchflussmesser Abgas G2
- 70: Verdichter
- 71: Entschweflungsstufe
- 72: Verbindungslinie
- 73: Abgasleitung
- 74: Grobfilter
- 76: Pumpe
- 78: Boosterpumpe
- 80: Verteilerbalken
- 82: 3. Temperatursensor
- 84: Abnahmeleitung
- 86: Zwischentank

## Patentansprüche

1. Verfahren zum Reinigen eines Großtanks für brennbare Flüssigkeit, insbesondere Rohöl, wobei zunächst die brennbare Flüssigkeit soweit wie möglich aus dem Großtank (20) entleert wird und im Großtank (20) ein Restsumpf (30) verbleibt und anschließend - nach einer evtl. Anlaufphase und vor einer evtl. Abschlussphase - folgende Schritte gleichzeitig durchgeführt werden:
a) Absaugen eines Volumenstroms an Gas aus einem Gasraum (34) des Großtanks (20) oberhalb des Restsumpfes (30) über eine Gasleitung (32) und aus dem Großtank (20),
b) Verbrennen des über die Gasleitung (32) entnommenen Gases in einer Brennkammeranlage (48), die eine Heizschlange (52) aufweist, und Erzeugen von heißem Wärmemedium, insbesondere Thermoöl oder Dampf und Abgas,
c) Rückführen zumindest eines Teils des Abgases über eine Abgasleitung (60, 62) in den Gasraum (34),
d) Absaugen über eine Absaugleitung (73), die im Restsumpf (30) mündet, eines Mengenstroms an Restsumpf (30) aus dem Großtank (20) und Einleiten dieses Mengenstroms in einen Wärmetauscher (56),
e) Leiten des heißen Wärmemediums durch den Wärmetauscher (56) und Erwärmen des durch den Wärmetauscher (56) transportierten Mengenstroms an Restsumpf (30) im Wärmetauscher (56),
f) Einleiten des erhitzten Mengenstroms an Restsumpf (30) in den Großtank (20) durch im Gasraum (34) endende, auf den Restsumpf (30) gerichtete Einspritzdüsen (24) unter hohem Druck von mindestens 20 bar auf einen Teilbereich der im Großtank (20) befindlichen Menge an Restsumpf (30), wobei die im Großtank (20) befindliche Menge an Restsumpf (30) nach und nach bewegt, erwärmt und aufgewirbelt wird, wobei Aerosole gebildet werden, die im Gasraum (34) Bestandteil des Gases sind und als Volumenstrom über die Gasleitung (32) abgesaugt werden.

2. Verfahren nach Anspruch 1, **dadurch gekennzeichnet, dass** im Gasraum (34) ein Unterdruck aufrechterhalten wird, dessen Wert vorzugsweise bei minus 0,001 bis 0,1 bar liegt.

3. Verfahren nach einem der vorangegangenen Ansprüche, **dadurch gekennzeichnet, dass** der Volumenstrom des über die Abgasleitung (60) in den Gasraum (34) rückgeführten Teil des Abgases minimal kleiner ist als der Volumenstrom des über die Gasleitung (32) aus dem Gasraum (34) abgesaugten Gases.

4. Verfahren nach einem der vorangegangenen Ansprüche, **dadurch gekennzeichnet, dass** die Sauerstoffkonzentration im Gasraum (34) erfasst wird und ein Anteil von ≤ 6 Vol-% an Sauerstoff im Gasraum (34) aufrechterhalten wird.

5. Verfahren nach einem der vorangegangenen Ansprüche, **dadurch gekennzeichnet, dass** bei dem Schritt f) die im Restsumpf (30) befindlichen Kohlenwasserstoffe aufgelöst, ausgewaschen und/oder aufgenommen werden und nicht lösbare anorganische Bestandteile als Sedimente auf dem Tankboden (28) zurückbleiben und dort als abschließender Restsumpf (30) verbleiben.

6. Verfahren nach einem der vorangegangenen Ansprüche, **dadurch gekennzeichnet, dass** im Schritt b) nur ein Teilstrom des über die Gasleitung (32) entnommenen Volumenstroms dem Wärmetauscher (56) zugeführt wird und der restliche Teilstrom in einem Speicher gespeichert wird.

7. Verfahren nach einem der vorangegangenen Ansprüche, **dadurch gekennzeichnet, dass** ein Stromerzeuger vorgesehen ist, dass der Stromerzeuger-Abgase produziert, und dass die Stromerzeuger-Abgase zusammen mit den Abgasen über die Abgasleitung (60) dem Gasraum (34) zugeführt werden.

8. Verfahren nach einem der vorangegangenen Ansprüche, **dadurch gekennzeichnet, dass** in einer Anlaufphase ein externes Brenngas, beispielsweise Propan, der Brennkammeranlage (48) zugeleitet wird, bis der Volumenstrom der gemäß Schritt a) abgesaugten Gase so ausreichend ist, dass damit die Brennkammeranlage (48) betrieben werden kann.

9. Verfahren nach einem der vorangegangenen Ansprüche, **dadurch gekennzeichnet, dass** zum Ende des Reinigungsverfahrens ein externes Brenngas, z.B. Propan der Brennkammeranlage (48) zugeführt wird, wenn das gemäß Schritt a) abgesaugte Gas nicht mehr zum Erzeugen eines ausreichenden Stromes an brennbarem Gasgemisch ausreicht.

10. Vorrichtung zum Reinigen eines Großtanks für brennbare Flüssigkeit, insbesondere Rohöl, in dem sich ein Restsumpf (30) befindet,
- mit einer Absaugleitung (73), die im Restsumpf (30) mündet, in welcher in der folgenden Reihenfolge ein Grobfilter (74), das Feststoffe mit einer Abmessung grösser als 5 mm zurückhält, eine Pumpe (76), ein Wärmetauscher (56), eine Boosterpumpe (78), die einen Ausgangsdruck von mindestens 20 bar hat, und mehrere Einspritzdüsen (24), die in einem Gasraum (34) des Großtanks enden, auf den Restsumpf (30) gerichtet sind und denen jeweils ein Ventil zugeordnet ist, angeordnet sind,
- mit einer Gasleitung (32), die im Gasraum (34) des Großtanks (20) oberhalb des Restsumpfes (30) ein Ansaugstück (36) aufweist, und in welcher in der folgenden Reihenfolge ein Gebläse (42), ein Gaswärmetauscher (44) für die Vorwärmung des Gases und Vergasung von Aerosol und ein Brenner (46) einer Brennkammeranlage (48) angeordnet sind,
- mit einer ersten Abgasleitung (60) und einer zweiten Abgasleitung (62), wobei die erste Abgasleitung (60) Abgase der Brennkammeranlage (48) zum Gaswärmetauscher (44) leitet und die zweite Abgasleitung (62) diese Abgase vom Gaswärmetauscher (44) über eine Mischstrecke (64) und einen Verdichter (70) in den Gasraum (34) leitet, und
- mit einem geschlossenen Kreislauf (54), in dem sich eine Heizschlange (52) der Brennkammeranlage (48) und der Wärmetauscher (56) befinden.

11. Vorrichtung zum Reinigen eines Großtanks nach Anspruch 10, **dadurch gekennzeichnet, dass** die vom Großtank (20) zum Gebläse (42) führende Gasleitung (32) kürzer als 10 m ist, damit sich die Aerosole möglichst nicht in der Gasleitung niederschlagen.

12. Vorrichtung zum Reinigen eines Großtanks nach Anspruch 10 oder 11, **dadurch gekennzeichnet, dass** eine Dosiereinheit für Eisenoxid oder eine Entschweflungsstufe (71), die insbesondere ein Aktivkohlefilter aufweist, die Bildung von schwefliger Säure aus einem Inertgas im Großtank (20) verhindert.

## Claims

1. A method for cleaning a large tank for a combustible liquid, in particular crude oil, wherein the combustible liquid is first drained from the large tank (20) as far as possible and residual sump matter (30) remains in the large tank (20), and then - subsequent to a possible start-up phase and prior to a possible completion phase - the following steps are carried out simultaneously:
a) extracting a volumetric flow of gas from a gas compartment (34) of the large tank (20) above the residual sump matter (30) via a gas line (32) and from the large tank (20),
b) burning the gas removed via the gas line (32) in a combustion chamber unit (48) having a heating coil (52), and generating a hot heat medium, in particular thermal oil or steam and exhaust gas,
c) returning at least a part of the exhaust gas into the gas compartment (34) via an exhaust gas line (60, 62),
d) extracting, via a suction extraction line (73) leading into the residual sump matter (30), a mass flow of residual sump matter (30) from the large tank (20) and feeding this mass flow into a heat exchanger (56),
e) conducting the hot heat medium through the heat exchanger (56) and heating the mass flow of residual sump matter (30) transported through the heat exchanger (56) in the heat exchanger (56),
f) feeding the heated mass flow of residual sump matter (30) into the large tank (20) through injection nozzles (24), which terminate in the gas compartment (34) and are directed onto the residual sump matter (30), under high pressure of at least 20 bar onto a portion of the amount of residual sump matter (30) located in the large tank (20), wherein the amount of residual sump matter (30) located in the large tank (20) is gradually moved, heated and stirred up, wherein aerosols are formed that are a constituent of the gas in the gas compartment (34) and are extracted as a volumetric flow via the gas line (32).

2. The method according to claim 1, **characterized in that** a negative pressure whose value is preferably minus 0.001 to 0.1 bar is maintained in the gas compartment (34).

3. The method according to any one of the preceding claims, **characterized in that** the volumetric flow of the part of the exhaust gas returned to the gas compartment (34) via the exhaust gas line (60) is minimally smaller than the volumetric flow of the gas extracted from the gas compartment (34) via the gas line (32).

4. The method according to any one of the preceding claims, **characterized in that** the oxygen concentration in the gas compartment (34) is detected and a content of < 6 vol% oxygen is maintained in the gas compartment (34).

5. The method according to any one of the preceding claims, **characterized in that**, in step f), the hydrocarbons located in the residual sump matter (30) are dissolved, rinsed out and/or absorbed, and non-soluble inorganic constituents remain behind as sediments on the tank bottom (28) and remain there as a final residual sump matter (30).

6. The method according to any one of the preceding claims, **characterized in that**, in step b), only a partial flow of the volumetric flow removed via the gas line (32) is fed to the heat exchanger (56) and the rest of the partial flow is stored in a storage tank.

7. The method according to any one of the preceding claims, **characterized in that** a power generator is provided, that the power generator produces exhaust gases, and that the power-generator exhaust gases are fed into the gas compartment (34) via the exhaust gas line (60) together with the exhaust gases.

8. The method according to any one of the preceding claims, **characterized in that**, in a start-up phase, an external fuel gas, e.g. propane, is fed into the combustion chamber unit (48) until the volumetric flow of the gases extracted in accordance with step a) is so sufficient that the combustion chamber unit (48) can be operated with it.

9. The method according to any one of the preceding claims, **characterized in that**, at the end of the cleaning process, an external fuel gas, e.g. propane, is fed into the combustion chamber unit (48) if the gas extracted in accordance with step a) no longer suffices for producing a sufficient flow of a combustible gas mixture.

10. A device for cleaning a large tank for a combustible liquid, in particular crude oil, in which a residual sump matter (30) is situated,
- with a suction extraction line (73) leading into the residual sump matter (30), in which are arranged, in the following order: a coarse filter (74) retaining solids with a dimension greater than 5 mm, a pump (76), a heat exchanger (56), a booster pump (78) having an outlet pressure of at least 20 bar, and several injection nozzles (24), which terminate in a gas compartment (34) of the large tank, are directed onto the residual sump matter (30), and to which one valve is respectively assigned,
- with a gas line (32), which has a suction-extraction part (36) in the gas compartment (34) of the large tank (20) above the residual sump matter (30), and in which are arranged, in the following order: a fan (42), a gas heat exchanger (44) for pre-heating the gas and gasifying aerosol, and a burner (46) of a combustion chamber unit (48),
- with a first exhaust gas line (60) and a second exhaust gas line (62), wherein the first exhaust gas line (60) feeds exhaust gases of the combustion chamber unit (48) to the gas heat exchanger (44), and the second exhaust gas line (62) feeds these exhaust gases from the gas heat exchanger (44) via a mixing section (64) and a compressor (70) into the gas compartment (34), and
- with a closed circuit (54) in which a heating coil (52) of the combustion chamber unit (48) and the heat exchanger (56) are located.

11. The device for cleaning a large tank according to claim 10, **characterized in that** the gas line (32) leading from the large tank (20) to the fan (42) is shorter than 10 m, so that the aerosols do not, if possible, deposit in the gas line.

12. The device for cleaning a large tank according to claim 10 or 11, **characterized in that** a metering unit for iron oxide or a desulfurization stage (71), which has, in particular, an activated-carbon filter, prevents the formation of sulfurous acid from an inert gas in the large tank (20).

## Revendications

1. Procédé, destiné à nettoyer un réservoir de grande envergure contenant des liquides inflammables, notamment du pétrole brut, dans un premier temps le liquide inflammable étant vidé autant que possible du réservoir de grande envergure (20) et un bas de cuve (30) restant dans le réservoir de grande envergure (20), ensuite (après une phase éventuelle de démarrage et avant une phase éventuelle d'achèvement), les étapes suivantes étant réalisées simultanément, consistant à :
a) Aspirer un débit volumétrique de gaz hors d'un espace gazeux (34) du réservoir de grande envergure (20), au-dessus du bas de cuve (30), via un conduit de gaz (32) et hors du réservoir de grande envergure (20),
b) faire brûler le gaz prélevé via le conduit de gaz (32) dans un système de chambre de combustion (48) qui comporte un serpentin chauffant (52) et générer un milieu chauffant chaud, notamment une huile thermique ou de la vapeur, ou des gaz de combustion,
c) recycler dans l'espace gazeux (34) au moins une partie des gaz de combustion via un conduit de gaz de combustion (60, 62),
d) aspirer via un conduit d'aspiration (73) qui débouche dans le bas de cuve (30) un débit de bas de cuve (30) hors du réservoir de grande envergure (20) et introduire ledit débit dans un échangeur thermique (56),
e) conduire le milieu chauffant chaud à travers l'échangeur thermique (56) et chauffer le débit de bas de cuve (30) transporté à travers l'échangeur thermique (56) dans l'échangeur thermique (56),
f) introduire le débit de bas de cuve (30) dans le réservoir de grande envergure (20) par des injecteurs (24) qui se terminent dans l'espace gazeux (34), orientés sur le bas de cuve (30) sous une haute pression d'au moins 20 bar sur une zone partielle du bas de cuve (30) qui se trouve dans le réservoir de grande envergure (20), la quantité de bas de cuve (30) se trouvant dans le réservoir de grande envergure (20) étant déplacée de bas en haut et fluidisée, des aérosols étant créés, qui dans l'espace gazeux (34) sont des composantes du gaz et sont aspirés sous forme de débit volumétrique via le conduit de gaz (32).

2. Procédé selon la revendication 1, **caractérisé en ce que** dans l'espace gazeux (34) est maintenue une dépression dont la valeur se situe de préférence à de moins 0,001 à 0,1 bar.

3. Procédé selon l'une quelconque des revendications précédentes, **caractérisé en ce que** le débit volumétrique de la partie du gaz de combustion recyclé via le conduit de gaz de combustion (60) dans l'espace gazeux (34) est au minimum inférieur au débit volumétrique du gaz aspiré via le conduit de gaz (32) hors de l'espace gazeux (34).

4. Procédé selon l'une quelconque des revendications précédentes, **caractérisé en ce que** la concentration en oxygène est détectée dans l'espace gazeux (34) et une part de gaz de combustion gaz de combustion ≤ à 6 % en volume d'oxygène est maintenue dans l'espace gazeux (34) .

5. Procédé selon l'une quelconque des revendications précédentes, **caractérisé en ce que** dans l'étape f), les hydrocarbures se trouvant dans le bas de cuve (30) sont dissous, rincés et/ou absorbés et **en ce que** des composants inorganiques non solubles restent sur le fond inférieur du réservoir (28) sous la forme de sédiments et y résident sous la forme de bas de cuve (30) terminal.

6. Procédé selon l'une quelconque des revendications précédentes, **caractérisé en ce que** dans l'étape b), seul un flux partiel du débit volumétrique prélevé via le conduit de gaz (32) est recyclé vers l'échangeur thermique (56) et le flux partiel résiduel est stocké dans un accumulateur.

7. Procédé selon l'une quelconque des revendications précédentes, **caractérisé en ce qu'**il est prévu un générateur électrique, **en ce que** le générateur électrique produit des gaz de combustion et **en ce qu'**en commun avec les gaz de combustion, les gaz de combustion du générateur électrique sont alimentés via le conduit de gaz de combustion (60) vers l'espace gazeux (34).

8. Procédé selon l'une quelconque des revendications précédentes, **caractérisé en ce que** dans une phase de démarrage, un gaz de combustion externe, par exemple du propane est alimenté vers le système de chambre de combustion (48) jusqu'à ce que le débit volumétrique des gaz aspirés selon l'étape a) soit suffisant pour permettre de faire fonctionner le système de chambre de combustion (48).

9. Procédé selon l'une quelconque des revendications précédentes, **caractérisé en ce que** vers la fin du procédé de nettoyage, un gaz combustible externe, par ex. du propane est alimenté vers le système de chambre de combustion (48) si le gaz aspiré selon l'étape a) ne suffit plus pour générer un flux suffisant de mélange gazeux combustible.

10. Dispositif destiné à nettoyer un réservoir de grande envergure contenant des liquides inflammables, notamment du pétrole brut, dans lequel se trouve un bas de cuve (30),
- pourvu d'un conduit d'aspiration (73), qui débouche dans le bas de cuve (30) dans lequel sont placés dans l'ordre successif suivant, un filtre grossier (74) qui retient des solides d'une dimension supérieure à 5 mm, une pompe (76), un échangeur thermique (56), une pompe booster (78) disposant d'une pression de sortie d'au moins 20 bar et plusieurs injecteurs (24) qui se terminent dans un espace gazeux (34) du réservoir de grande envergure, qui sont orientés sur le bas de cuve (30) et à chacun desquels est associée une soupape,
- pourvu d'un conduit de gaz (32), qui dans l'espace gazeux (34) du réservoir de grande envergure (20), au-dessus du bas de cuve (30) comporte une pièce d'aspiration (36) et dans lequel, dans l'ordre successif suivant sont placés une soufflante (42), un échangeur thermique de gaz (44) destiné à préchauffer les gaz et à gazéifier de l'aérosol et un brûleur (46) d'un système de chambre de combustion (48),
- pourvu d'un premier conduit de gaz de combustion (60) et d'un deuxième conduit de gaz de combustion (62), le premier conduit de gaz de combustion (60) dirigeant des gaz de combustion du système de chambre de combustion (48) vers l'échangeur thermique de gaz (44) et le deuxième conduit de gaz de combustion (62) dirigeant lesdits gaz de combustion de l'échangeur thermique de gaz (44) via un trajet mélangeur (64) et un compresseur (70) dans l'espace gazeux (34) et
- pourvu d'un circuit clos (54), dans lequel se trouvent un serpentin chauffant (52) du système de chambre de combustion (48) et l'échangeur thermique (56).

11. Dispositif destiné à nettoyer un réservoir de grande envergure selon la revendication 10, **caractérisé en ce que** le conduit de gaz (32) menant du réservoir de grande envergure (20) vers la soufflante (42) est plus court que 10 m, pour que si possible, les aérosols ne se précipitent pas dans le conduit de gaz.

12. Dispositif destiné à nettoyer un réservoir de grande envergure selon la revendication 10 ou 11, **caractérisé en ce qu'**il est prévu une unité de dosage d'oxyde de fer ou une étape de désulfuration (71) qui comporte notamment un filtre au charbon actif empêchant la création d'acides sulfureux à partir d'un gaz inerte dans le réservoir de grande envergure (20).
